# FASCICULE DE BREVET EUROPEEN

(11) **EP 1 579 185 B1**
(45) Date de publication et mention de la délivrance du brevet: **16.08.2006**
(21) Numéro de dépôt: 03814477.0
(22) Date de dépôt: 16.12.2003
(51) Int. Cl.: G01M 15/00

(54) **PROCEDE ET DISPOSITIF POUR LA DETERMINATION EN CONTINU DE LA DEGRADATION DES SYSTEMES DE POST-TRAITEMENT DES GAZ D'ECHAPPEMENT DE MOTEUR THERMIQUE**
VERFAHREN UND EINRICHTUNG ZUR KONTINUIERLICHEN BESTIMMUNG DER ABNUTZUNG VON SYSTEMEN FÜR DIE NACHBEHANDLUNG VON WÄRMEMOTOR-ABGASEN
METHOD AND DEVICE FOR THE CONTINUOUS DETERMINATION OF THE DETERIORATION OF SYSTEMS USED FOR THE POST-TREATMENT OF HEAT ENGINE EXHAUST GASES

(30) Priorité: 16.12.2002 FR 0215906
(43) Date de publication de la demande: 28.09.2005
(73) Titulaire: TotalFinaElf France, 92800 Puteaux (FR); Delta Services Industriels SPRL, 7503 Froyennes (BE)
(72) Inventeur: DELVIGNE, Thierry, B-7503 Froyennes (BE); OBIOLS, Jérôme, F-69003 Lyon (FR)
(74) Mandataire: Pöpping, Barbara
(86) Numéro de dépôt international: PCT/FR2003/003738
(87) Numéro de publication internationale: WO 2004/061406

(56) Documents cités:
- EP-A- 0 269 300
- EP-A- 0 273 662
- EP-A- 0 636 771
- US-A- 2 957 986
- US-A- 3 471 696
- US-A- 4 048 497
- US-A- 4 421 982
- US-A- 4 746 795

## Description

La présente invention concerne un procédé et un dispositif pour la détermination en continu de la dégradation des systèmes de post-traitement des gaz d'échappement de moteur thermique. Plus précisément, l'invention vise à suivre en continu l'incidence des lubrifiants et/ou des carburants sur la dégradation de tels systèmes de post-traitement.

Ces systèmes de post-traitement des gaz d'échappement, notamment les systèmes permettant de retenir les particules et/ou d'éliminer les oxydes d'azote, les oxydes de carbone et les hydrocarbures résiduels, sont devenus des éléments indispensables aux moteurs thermiques, afin de limiter les rejets nuisibles à l'environnement et, plus particulièrement, à la qualité de l'air.

Toutefois, l'efficacité d'un système de post-traitement n'est pas constante et elle diminue lors de son utilisation et varie en fonction de la nature et la quantité des gaz de combustion traités. En effet, certains éléments des gaz ont tendance à se fixer au sein du système de post-traitement et à dégrader de ce fait son efficacité.

Or la perte d'efficacité du système de post-traitement peut avoir sur le fonctionnement du moteur un impact tel qu'elle entraîne des baisses de performances de celui-ci et augmente la consommation de carburant, dans le cas notamment d'un filtre à particules détérioré.

On ressent donc la nécessité dans la technique, aussi bien chez les fabricants d'automobiles que chez les producteurs d'huiles lubrifiantes, de carburants et d'additifs, de disposer d'un procédé et d'un dispositif permettant la mesure en continu de la dégradation des systèmes de post-traitement de moteurs à combustion interne (voir par example EP-A-O 636 771).

Les travaux effectués par la Demanderesse dans ce domaine l'ont amenée à mettre au point un procédé et un dispositif pour la détermination en continu de la dégradation induite dans les systèmes de post-traitement des gaz d'échappement d'un moteur thermique par le carburant, par l'huile lubrifiante et/ou par les additifs contenus dans le carburant et/ ou l'huile lubrifiante, qui ne nécessitent pas le montage ou le démontage de dispositifs spéciaux et qui peuvent être mis en oeuvre facilement, à l'aide d'appareillages simples et éprouvés.

Plus précisément, le procédé que propose la présente invention vise à permettre de mesurer l'impact en continu de l'huile lubrifiante, du carburant et/ou des additifs utilisés, que l'on retrouve tels quels ou sous forme de produits résiduels dans les gaz d'échappement, sur la dégradation du ou de systèmes de post-traitement du moteur thermique.

A titre d'exemples de produits résiduels, on citera en particulier les traces d'huile, de carburant et/ou d'additifs, les produits de décomposition et de combustion de l'huile et des additifs, et les produits de combustion du carburant.

Dans son principe, l'invention consiste à modifier l'huile lubrifiante, le carburant et/ou le(s) additif(s) avec un radiotraceur, pour mesurer en aval du moteur la radioactivité des gaz de combustion accumulée dans le système de post-traitement à l'aide d'une sonde sensible à un rayonnement ionisant, en vue d'en déduire la quantité de produits résiduels présents et donc le degré de dégradation dudit système de post-traitement.

L'invention a par conséquent pour premier objet un procédé de détermination en continu de la dégradation d'au moins un système de post-traitement des gaz d'échappement d'un moteur à combustion interne due à l'huile lubrifiante, au carburant et/ou à au moins un additif de l'huile lubrifiante et/ ou du carburant utilisé, caractérisé en ce que :
(i) on modifie l'huile lubrifiante, le carburant et/ou l'additif dont on désire mesurer l'impact sur le système de post-traitement avec une quantité déterminée d'au moins un radiotraceur ;
(ii) on mesure, au niveau du système de post-traitement, la quantité de radiotraceur accumulée et issue des gaz d'échappement, cette mesure étant effectuée à l'aide d'un détecteur sensible à un rayonnement émis par le radiotraceur retenu par le système de post-traitement ;
(iii) on transmet les mesures effectuées par ce détecteur à un ordinateur programmé, apte à convertir ces mesures en le degré de dégradation du système de post-traitement due à l'huile lubrifiante, au carburant et/ ou aux additifs.

La mise en oeuvre en continu de ce procédé présente de nombreux avantages qui ressortiront de la présente description. Parmi ces avantages, le procédé selon l'invention permet notamment de déterminer plus aisément la durée de vie d'un système de post-traitement en fonction de l'huile, du carburant et/ou de l'additif utilisé, et donc d'anticiper sur son remplacement ou sa régénération.

Par ailleurs, le procédé selon l'invention permet de choisir de façon simple et relativement rapide les lubrifiants, carburants et/ou additifs les mieux adaptés à un système de post-traitement considéré. L'homme du métier pourra ainsi employer le procédé selon l'invention pour minimiser l'impact des produits résiduels sur la dégradation des systèmes de post-traitement et pour prolonger en conséquence leur durée de vie.

Le radiotraceur utilisé dans le cadre de l'invention est sélectionné de façon telle que la quantité retrouvée dans le système de post-traitement soit proportionnelle à la quantité d'huile, de carburant et/ou d'additif présent(s) tel(s) quel(s) ou sous forme de produits résiduels dans ledit système. Ainsi, la quantité mesurée du radiotraceur accumulé dans le système de post-traitement traduit avec précision le degré de dégradation engendré par l'huile lubrifiante, le carburant et/ou l'additif.

On notera que la quantité nécessaire de radiotraceur pour un suivi efficace dépend notamment de la nature du radiotraceur (type et énergie de rayonnement), du positionnement du détecteur par rapport au système de post-traitement, de la géométrie du détecteur et de celle du système de post- traitement et des éventuels écrans et blindages.

A l'exception des radiotraceurs commercialisés sous forme radioactive (donc par définition de « nature radioactive » et ne nécessitant pas d'activation), le radiotraceur utilisé dans le procédé selon l'invention est généralement à base d'une espèce activable, c'est-à-dire une espèce initialement non-radioactive nécessitant une activation, qui peut être effectuée avant ou après son mélange avec l'huile moteur, le carburant ou l'additif. Cette activation peut être réalisée par voie neutronique, au moyen d'une irradiation effectuée par une source neutronique, ou effectuée par un faisceau de protons, à l'aide d'un accélérateur de particules, dans des conditions appropriées connues de l'homme du métier.

Une des options possibles pour l'activation est d'incorporer l'espèce à activer dans une quantité appropriée d'un vecteur (par exemple un solvant ou diluant tel qu'une huile de dilution, etc.), puis de soumettre le mélange obtenu à l'activation adéquate et enfin de le mélanger à l'huile moteur, au carburant ou à l'additif, ce dernier pouvant être contenu dans l'huile ou le carburant.

Le radiotraceur est nécessairement choisi de façon telle que son rayonnement soit mesurable et il peut être de nature très diverse, selon qu'il est incorporé à l'huile lubrifiante ou au carburant.

Une première forme de mise en oeuvre du procédé de l'invention concerne le suivi de l'impact d'un additif déterminé Adh pour huile lubrifiante sur la dégradation d'un système de post-traitement.

Le radiotraceur peut être choisi parmi au moins une espèce EAhi activable, dont la composition est identique à celle de l'additif Adh. Dans ce cas, la quantité d'espèce EAhi activée introduite dans l'huile se substitue à une quantité identique de l'additif Adh, afin de ne pas modifier les performances de l'huile.

On peut également utiliser d'autres espèces EAhii activables différentes des additifs et sans effet sur les propriétés d'utilisation de l'huile, dont la quantité retrouvée dans le système de post-traitement reste corrélée à l'impact de l'additif Adh.

Les espèces EAhi et/EAhii susceptibles d'être marquées sont, notamment, les éléments tels que le zinc, le brome, le sodium, le molybdène, le phosphore, le soufre, le cuivre, le calcium et le magnésium, ou les produits contenant au moins l'un de ces éléments.

A titre d'exemple d'espèce EAhii activable dont la quantité retrouvée dans le système de post-traitement reste corrélée à l'impact de l'additif Adh, on peut citer le strontium qui, lorsqu'il est incorporé aux détergents contenant du calcium, par exemple les sulfonates de calcium, se comporte comme l'élément calcium au niveau du système de post-traitement et reflète l'impact du calcium sur celui-ci.

Des produits connus peuvent aussi constituer les espèces activables EAhi, et l'on peut citer, parmi ces produits, les familles d'additifs usuels pour lubrifiants connues de l'homme du métier, par exemple, le dithiophosphate de zinc, les sulfonates de calcium, les sulfonates de magnésium, les phénates de calcium, les phénates de magnésium, les salicylates de calcium, les salicylates de magnésium, etc.

Une deuxième forme de mise en oeuvre du procédé de l'invention concerne le suivi de l'impact de l'huile lubrifiante moteur sur la dégradation d'un système de post-traitement.

Dans cette forme de mise en oeuvre, le radiotraceur incorporé dans l'huile est choisi parmi les espèces activables. EHi sélectionnées par l'homme du métier de façon telle que la quantité retrouvée dans le système de post-traitement est proportionnelle à l'impact de l'huile sur ledit système (exemples : traces d'huiles et produits de combustion et de décomposition de l'huile).

Selon une première variante avantageuse, les espèces activables EHi susceptibles d'être marquées sont sélectionnées parmi les espèces activables EAhi et/ou EAhii déjà mentionnées. Dans ce cas, la radioactivité mesurée au niveau du système de post-traitement peut refléter aussi bien l'impact de l'huile, l'impact d'un additif donné Adh de celle-ci ou les deux à la fois. Comme précédemment, pour la première forme de mise en oeuvre, la quantité d'espèce EAhi activée introduite dans l'huile se substitue à une quantité identique d'additif de l'huile Adh.

Selon une deuxième variante, on peut également utiliser d'autres espèces activables EHi sans effet sur les propriétés d'utilisation de l'huile et dont la quantité recueillie au niveau de la sortie des gaz d'échappement reste corrélée à la consommation d'huile moteur.

Parmi ces espèces Ehi activées, on citera par exemple les isotopes des halogènes, tels que par exemple le fluor-18 et le brome-82, le germanium-68, le germanium-69, et le technétium 99-m.

Ces éléments Ehi peuvent être utilisés seuls ou sous forme de produits contenant ledit élément et peuvent y être incorporés au sein d'un vecteur. Par exemple, le technétium 99-m peut être incorporé dans l'huile sous forme d'une solution aqueuse de pertechnétate de sodium NaTcO₄.

On peut également utiliser du technétium 99-m conditionné sous forme de particules de dimensions nanométriques et isolées de l'atmosphère par du carbone. On citera à ce sujet le produit commercialisé sous la marque Technégaz, qui en est habituellement utilisé pour l'étude clinique de la ventilation des poumons.

Concernant le germanium-68 et le germanium-69, on peut les ajouter à l'huile lubrifiante par exemple sous forme de tétraalkylgermanes contenant au moins un de ces isotopes.

Une troisième forme de mise en oeuvre du procédé de l'invention concerne le suivi de l'impact d'un additif Adc donné pour carburant (essence ou gas-oil) sur la dégradation d'un système de post-traitement.

Le radiotraceur peut être choisi parmi au moins une espèce EAci activable, dont la composition est identique à celle de l'additif Adc. Dans ce cas, la quantité d'espèce EAci introduite dans l'huile se substitue à une quantité identique d'additif Adc afin de ne pas modifier les performances du carburant.

On peut également utiliser d'autres espèces EAcii activables sans effet sur les propriétés d'utilisation du carburant et dont la quantité retrouvée dans le système de post-traitement reste corrélée à l'impact de l'additif Adc sur le système de post-traitement.

Ces autres espèces EAcii susceptibles d'être utilisées sont, par exemple, les espèces EAhii déjà mentionnées comme radiotraceurs pour le suivi de l'impact des additifs lubrifiants.

Les espèces EAci et/ou EAcii susceptibles d'être marquées sont, par exemple, les éléments suivants : le manganèse, le cérium, le potassium, le baryum et le calcium, ainsi que les produits contenant au moins l'un de ces éléments.

Une quatrième forme de mise en oeuvre du procédé de l'invention concerne le suivi de l'impact du carburant sur la dégradation d'un système de post-traitement.

Dans cette variante, le radiotraceur incorporé dans le carburant est sélectionné parmi des espèces activables ECi, ces espèces étant sélectionnées par l'homme du métier de façon telle que la quantité retrouvée dans le système de post-traitement soit proportionnelle à l'impact du carburant sur ledit système.

Les espèces ECi susceptibles d'être marquées sont avantageusement sélectionnées parmi les espèces activables EAci déjà citées ci-dessus à propos du suivi de l'impact des additifs pour carburant ou parmi les espèces EAcii activables, utilisables dans le même but, sans impact sur les propriétés du carburant.

Dans ce cas, la radioactivité mesurée au niveau du système de post-traitement peut refléter aussi bien l'impact du carburant, l'impact d'un additif donné Adc ou avantageusement les deux à la fois.

On peut toutefois également utiliser d'autres espèces ECii sans impact sur les propriétés d'utilisation du carburant et dont la quantité recueillie au niveau de la sortie des gaz d'échappement reste corrélée à l'impact du carburant sur le système de post-traitement. On citera de nouveau parmi elles les isotopes des halogènes tels que par exemple le brome-82 et le fluor-18, le germanium-68, le germanium-69, et le technétium 99-m.

Ces éléments radioactifs peuvent être utilisés seuls ou sous forme de produits contenant l'élément en question, et peuvent y être incorporés au sein d'un vecteur. Par exemple, le technétium 99-m peut être incorporé dans le carburant sous forme d'une solution aqueuse de pertechnétate de sodium NaTcO₄ ou sous forme de particules de dimensions nanométriques et isolées de l'atmosphère par du carbone.

Afin de simplifier l'élimination des radiotraceurs retenus par le système de post traitement, on privilégiera l'utilisation d'éléments radioactifs à courte demi-vie tels que le brome 82, le germanium-69 ou le technétium 99-m. Toutefois, des espèces comprenant des éléments radioactifs plus classiques tels que Sr, Zn, Ca, S, P et Mg, sont utilisables en employant des méthodes d'élimination appropriées, par exemple un piégeage en aval du ou des systèmes de post-traitement.

Les systèmes de post-traitement d'un moteur à combustion interne dont on veut mesurer le degré de dégradation lié au type de carburant, de lubrifiant et/ou d'additif(s) utilisé(s) peuvent être de différents types. Les principaux types concernés dans le cadre de l'invention sont :
(i) les systèmes catalyseurs d'oxydation à une ou deux voies pour moteurs diesel (réduction de CO et/ou d'hydrocarbures) et à trois voies pour moteurs à essence (réduction de CO, d'oxydes d'azote NOₓ et d'hydrocarbures),
(ii) les systèmes d'élimination des NOₓ (piège à NOₓ ou catalyseur pour la réduction des NOₓ),
(iii) et les systèmes de filtres à particules (catalysés ou non).

A titre d'exemple, les filtres à particules de l'une des technologies developpées actuellement comportent au moins un élément de filtration constitué par un support filtrant à structure poreuse, fixé dans une enveloppe métallique, qui est reliée à la ligne des gaz d'échappement. Le support filtrant disposé dans l'enveloppe métallique du filtre (appelée "canning") peut être constitué par des éléments en céramique poreuse. Le support filtrant est traversé par les gaz d'échappement entre une extrémité d'entrée et une extrémité de sortie du filtre, et il peut retenir les particules de radiotraceurs des produits résiduels contenus dans les gaz d'échappement.

On notera que le détecteur des particules de radiotraceur retenues par le système de post-traitement peut être disposé avantageusement à proximité immédiate de celui-ci, ce qui facilite considérablement les mesures.

Ce détecteur est une sonde de détection de rayonnements ionisants (rayons bêta, X ou gamma) pouvant être soit de type scintillateur liquide ou solide [cristal iodure de sodium NaI(T1), cristal BGO] soit de type semi-conducteur [cristal germanium, cristal CZT].

Ces types de détecteurs permettent de mettre en oeuvre de façon continue le procédé conforme à l'invention et l'acquisition des données peut se faire en un temps très court, de l'ordre d'une seconde.

On notera en outre que le détecteur peut déceler simultanément la présence de divers traceurs modifiant l'huile, le carburant ou le(s)additifs ainsi que leurs quantités respectives dans les gaz de combustion ; ce qui permet de relier la quantité de chacune des espèces radiomarquées à l'impact de l'huile, du carburant et/ou du ou des additifs sur le système de post-traitement.

Les signaux détectés sont ensuite traités par une série de moyens permettant de calculer l'impact de l'huile lubrifiante, du carburant et/ou de l'additif. Ces moyens comprennent notamment un moyen de traitement du signal détecté (par exemple avec amplificateur, filtre et convertisseur analogique/numérique CAD), un moyen d'analyse des hauteurs d'impulsions (par exemple un analyseur multicanal) et un moyen de stockage et de traitement des données acquises (par exemple un ordinateur de type PC).

L'invention a également pour objet un dispositif pour la détermination en continu de la dégradation d'au moins un système de post-traitement des gaz d'échappement d'un moteur à combustion interne, due à l'huile lubrifiante, au carburant et/ou à au moins un additif de l'huile lubrifiante et/ou du carburant utilisé(s), ce dispositif comprenant un moyen d'incorporation dans l'huile lubrifiante ou dans le carburant d'une quantité déterminée d'au moins un traceur radioactif et en aval du moteur, au moins un système de post-traitement des gaz de combustion issus du moteur, ce dispositif étant caractérisé en ce qu'il comprend :
(i) à proximité du système de post-traitement et à une distance de celui-ci permettant de mesurer un rayonnement émis par les particules de traceur retenues par ce système, un détecteur sensible au rayonnement du traceur radioactif ;
(ii) en liaison fonctionnelle avec le détecteur, un ordinateur programmé apte à calculer à convertir les mesures effectuées par le détecteur en le degré de la dégradation du système de post-traitement due à l'huile lubrifiante, au carburant et/ou aux additifs.

Le système de post-traitement susceptible d'être dégradé par les produits résiduels de l'huile lubrifiante, du carburant et/ou des additifs peut être placé en aval du moteur, en toute position lui permettant d'être au contact des gaz de combustion. Il peut ainsi être situé sur la ligne d'échappement des gaz du moteur.

Le moteur peut être couplé à plus d'un système de post-traitement. Par exemple, un moteur à carburant diesel peut comporter un système catalytique d'oxydation à deux voies et un filtre à particules, et un moteur à essence peut comporter un système catalytique à trois voies et un système d'élimination des NOₓ.

Avant rejet à l'atmosphère des gaz d'échappement, si le système de post-traitement n'est pas lui-même un filtre à particules, un tel filtre devra nécessairement être prévu en aval de ce système, sur la ligne d'échappement, afin de piéger les espèces radioactives restantes.

Les dessins annexés illustrent la mise en oeuvre de l'invention. Sur ces dessins :
La figure 1 est une vue schématique illustrant la mise en oeuvre du procédé de l'invention ;
La figure 2 est un diagramme relatif à des exemples de mise en oeuvre qui seront décrits ci-après.

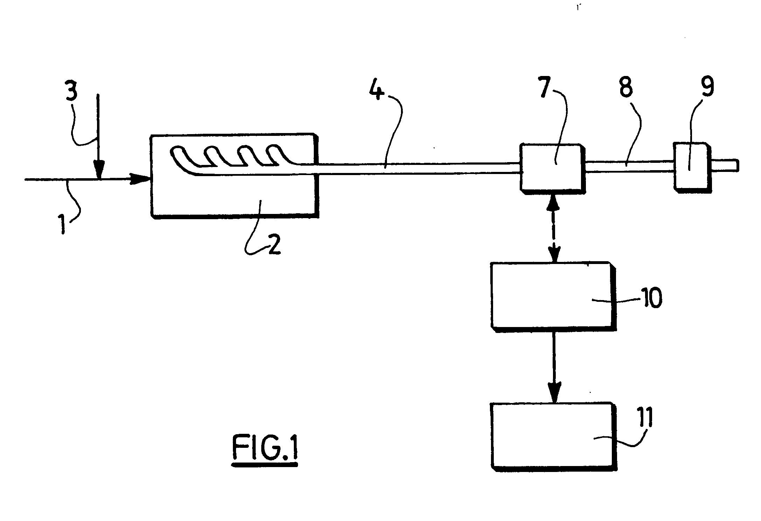

On se référera d'abord à la figure 1.

Dans cette forme de mise en oeuvre, sur le circuit d'huile lubrifiante 1 du moteur à combustion interne 2 est prévue en dérivation une ligne 3 d'introduction d'une quantité prédéterminée de la même huile lubrifiante additionnée d'au moins un traceur radioactif.

Les produits de combustion du moteur 2 sont évacués par la ligne 4 jusqu'à un système 7 de post-traitement des gaz d'échappement, qui peut être de l'un quelconque des types mentionnés ci-dessus et dans lequel peuvent se déposer des particules du traceur radioactif présentes dans les gaz d'échappement.

Avant d'être évacués à l'extérieur par la ligne 8, ces gaz traversent un filtre à particules 9, destiné à retenir les dernières particules radioactives présentes avant évacuation des gaz à l'atmosphère.

A proximité immédiate du système 7 est prévue une sonde 10 de détection de rayonnements ionisants, qui permet de mesurer en continu la quantité présente dans le système 7 de particules du radiotraceur incorporé dans l'huile lubrifiante.

Les mesures effectuées par la sonde 10 sont transmises à un ordinateur 11, apte à convertir ces mesures en le degré de dégradation du système 7 de post-traitement sous l'effet de l'huile lubrifiante.

Ainsi qu'il a été exposé ci-dessus, on utilisera de préférence comme radiotraceur de l'huile lubrifiante, un composé radioactif à courte demie-vie, notamment le technétium-99m.

Les exemples ci-après, qui n'ont pas de caractère limitatif, illustrent la mise en oeuvre de l'invention et les avantages de celle-ci.

### EXEMPLE 1

Dans cet exemple, la dégradation de deux systèmes distincts de post-traitement placés sur la ligne d'échappement d'un moteur thermique à quatre temps est déterminée en continu.

On étudie ici l'impact d'un additif d'huile lubrifiante marqué par activation neutronique.

Le moteur utilisé dans ces essais est un moteur de motocyclette HONDA (marque déposée), connu sous l'appellation commerciale HORNET, de 600 cm³. Afin d'écourter la durée des essais, le moteur a été configuré de telle manière telle que sa consommation en huile avoisine 1 litre/heure au régime de 6000 tours/mn, la consommation en huile du moteur d'origine étant très faible.

L'huile pour moteur à quatre temps est une huile pour motocyclette commercialisée sous la marque ELF, type 4 DXRatio.

L'additif activé est un DTPZn (DiThioPhosphate de Zinc) secondaire, irradié pendant plusieurs heures sous un flux de neutrons thermiques. La réaction transforme partiellement le Zn-64 stable en zinc-65 (⁶⁵Zn) radioactif.

L'huile finie est préparée par mélange de tous les additifs, dont l'additif marqué, selon les spécifications du fabricant. L'activité spécifique de l'huile reconstituée est de 240 kBq/litre.

Les systèmes de post-traitement utilisés sont :
- un filtre à particules de type FAP disponible dans le commerce, prévu pour le moteur PSA 2,2 litres HDI ;
- un catalyseur d'oxydation disponible dans le commerce, installé sur un véhicule Peugeot ou Citroën équipé du moteur 1,4 litre HDI.

Ces deux éléments ont été placés en série à la sortie du moteur, le catalyseur d'oxydation étant installé en amont du FAP (voir Figure 1).

Les systèmes de détection de rayonnement gamma ont été installés à proximité des systèmes de post-traitement, afin d'y mesurer, en continu, l'accumulation de l'élément marqué (le zinc-65). Il s'agit de détecteurs standards à iodure de sodium NaI(T1) de 7,62 x 7,62 cm (3 x 3 pouces) avec tube photomultiplicateur intégré, les autres éléments de la chaîne de mesure étant un préamplificateur de charge modèle 2007P de marque Canberra, un amplificateur de spectroscopie 2020 (Canberra), un convertisseur ADC modèle 8087 (Canberra), et une carte multicanaux modèle S100 (Canberra).

Les logiciels mis en oeuvre lors de ces essais sont le logiciel « Génie 2000 » (Canberra) pour la spectrométrie gamma, ainsi que le logiciel d'analyse MCS (Echelonnage à canaux multiples) « IDSWear » commercialisé par la société Atlantic Nuclear Services (ANS), Canada. Ce logiciel permet de suivre l'évolution temporelle du taux de comptage de chaque détecteur dans des fenêtres d'énergie prédéfinies (en l'occurrence le pic de 1115 keV du zinc-65 dans le cadre des essais effectués).

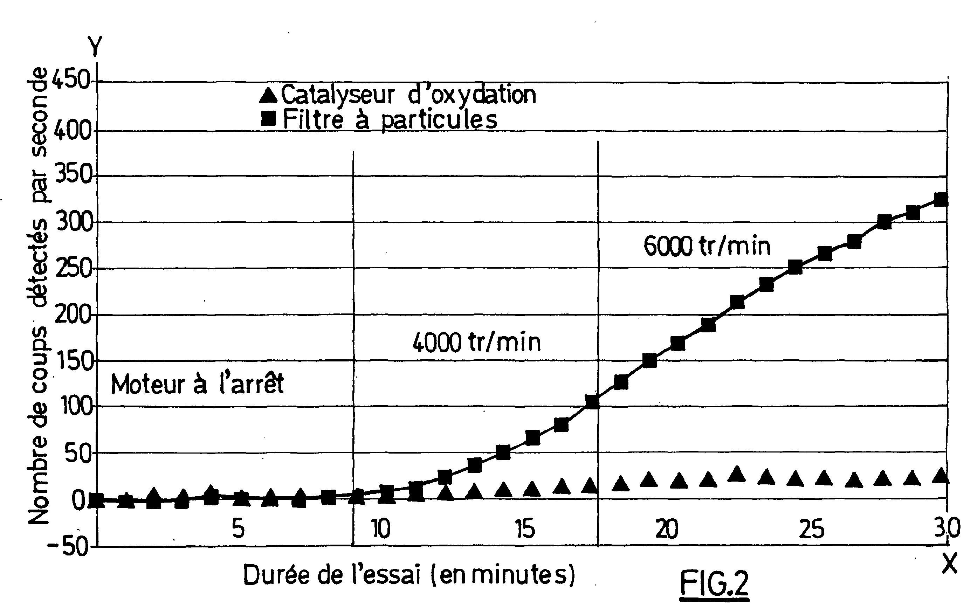

La figure 2 illustre l'accumulation de zinc-65 dans les deux systèmes de post-traitement pendant les essais. Le moteur, non contaminé et alimenté avec de l'essence non activée, a été mis en marche au temps t = 10 minutes et on l'a fait fonctionner à différents régimes (4000 et 6000 t/mn).

L'axe X indique la durée de l'essai en minutes et l'axe Y indique le nombre de rayons gamma détectés par seconde (coups/s) au niveau du catalyseur d'oxydation et du filtre à particules.

On constate que l'augmentation d'activité est nettement plus importante dans le filtre à particules (de l'ordre de 16 fois supérieure), ce qui s'explique par les concepts très différents des deux systèmes de post-traitement :
- dans le cas du catalyseur d'oxydation, l'empoisonnement résulte d'un dépôt de zinc-65 sur les parois du catalyseur (dont l'effet négatif est une désactivation chimique),
- pour le filtre à particules, l'empoisonnement résulte d'un piégeage dans les parois du filtre (qui peut engendrer une accumulation de cendres causant un colmatage), le filtre offrant une excellente efficacité de piégeage pour des particules de très petite taille.

Au régime de 6000 tours/mn, on constate, au niveau du filtre à particules, une élévation du taux de comptage de 220 coups/seconde après 12 minutes à ce régime. En considérant que le FAP retient environ 95% du zinc-65 émis, et en tenant compte de la géométrie de détection et de l'efficacité de la chaîne de comptage pour le rayonnement émis par le ⁶⁵Zn (de l'ordre de 0,4%), on peut ainsi calculer un débit de l'activité émise par le moteur d'environ 290 kBq par heure, ce qui correspond à un passage d'huile dans le filtre de l'ordre de 1,2 litre par heure. Ce résultat est cohérent avec la consommation réelle du moteur.

On constate également que le catalyseur d'oxydation a retenu environ 6% de la charge en ⁶⁵Zn libéré par le moteur.

Cet exemple montre donc clairement la possibilité d'utiliser le procédé selon l'invention pour des études de suivi en continu de la dégradation de systèmes de post-traitement de technologie relativement simple (désactivation chimique de catalyseurs d'oxydation) ou complexe (catalyseur en série avec un filtre à particules).

### Exemple 2.

Cet exemple concerne le suivi de l'accumulation de résidus cendreux provenant du lubrifiant au niveau d'un système de post-traitement diesel de type filtre à particules.

A partir d'un échantillon de DTPZn activé par irradiation neutronique (contenant du zinc-65), dont l'activité spécifique est de 95 kBq/ml, et à partir d'un échantillon d'huile d'essai auquel du strontium-85 a été incorporé dans le détergent (sulfonate de calcium), on prépare 50 litres d'huile ayant une activité spécifique de 21.2 kBq/l en Zn-65 et de 10.47 kBq/l en Sr-85 (le strontium étant ajouté en cours d'essai.

L'huile ainsi marquée est introduite dans le carter du moteur 2.2L turbo-diesel d'une Renault Laguna, équipée d'un filtre à particules à l'échappement. Le véhicule, installé sur un banc à rouleaux, suit des cycles pré-programmés de 471 km, choisis de manière à favoriser la consommation d'huile par le moteur.

Le moteur utilisé est non contaminé et est alimenté avec du carburant non activé. Six vidanges ont été effectuées après 10 000 km, et une vidange a été effectuée après 20 000 km. Pour des raisons techniques, le traceur au strontium-85 n'a été ajouté qu'après 60 000 km de roulage. Tous les 5 000 km, le filtre à particules est démonté après une phase de régénération ayant permis la combustion de tous les résidus organiques et est pesé. Connaissant la masse initiale du filtre, la masse de résidus inorganiques accumulée (appelés résidus cendreux) est calculée. L'activité en zinc-65 et en Sr-85 du filtre est également mesurée, le système de détection étant similaire à celui décrit dans l'exemple 1.

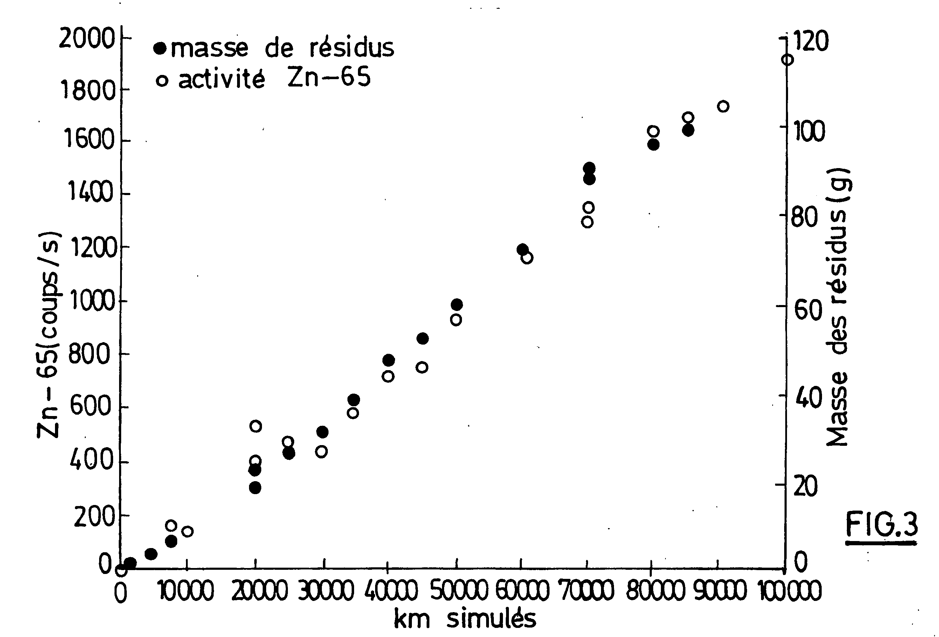

La figure 3 montre le suivi de l'accumulation de résidus cendreux dans le filtre (ronds vides) et le suivi de l'accumulation de Zn-65 dans le filtre (ronds pleins) en fonction du kilométrage du véhicule.

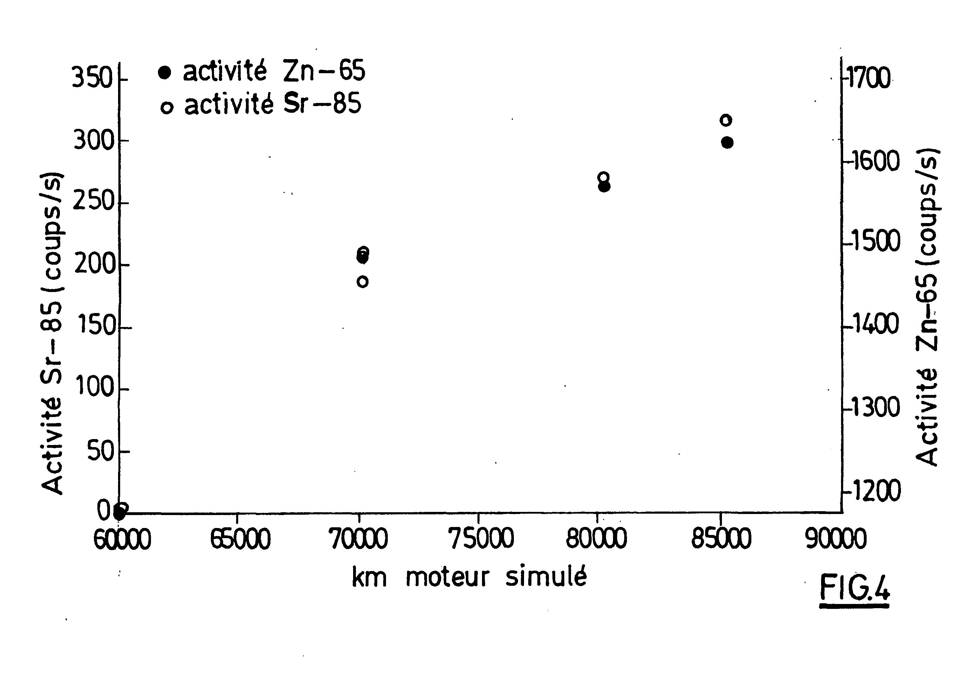

La figure 4 montre le suivi de l'accumulation dans le filtre de Zn-65 (ronds pleins) et de Sr-85 (rond vides) en fonction du kilométrage du véhicule. Etant donné la forme chimique du Zn-65 et du Sr-85 décrite plus haut dans cet exemple, ceci permet de mettre en évidence le fait que le zinc du DTPZn et le calcium des détergents sont accumulés dans des proportions identiques dans le filtre à particules (aucun de ces composants n'est accumulé de manière préférentielle dans le filtre).

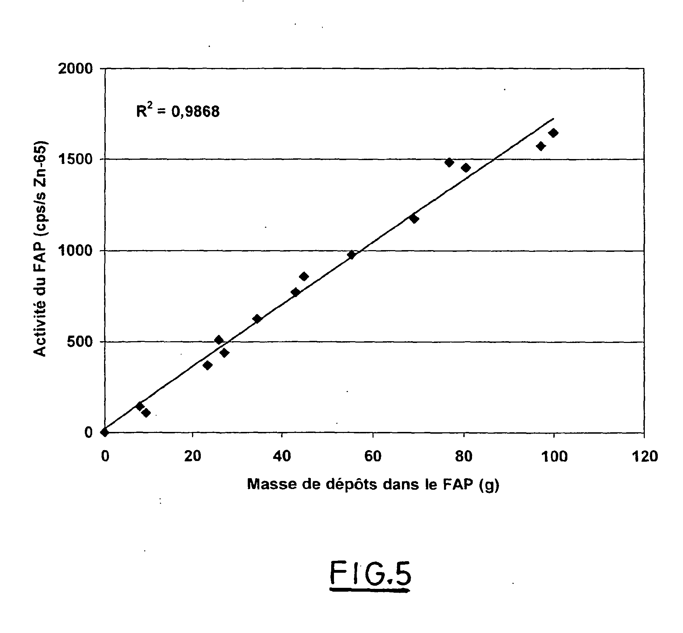

La figure 5 montre la relation entre la masse de résidus cendreux accumulés dans le filtre et l'activité en Zn-65 du même filtre au cours du roulage du véhicule. Cet exemple montre donc de manière évidente que le suivi de l'accumulation de Zn-65, utilisé sous forme de DTPZn activé, au niveau du filtre à particules est représentatif de l'accumulation de résidus cendreux dans le filtre à particules provenant de la combustion de l'huile.

La mesure d'activité au niveau du filtre à particules étant possible en continu, il est donc possible de déterminer en continu et avec précision, même sur de courtes périodes, la détérioration du filtre à particules liée à l'accumulation de résidus cendreux provenant de la combustion du lubrifiant.

## Revendications

1. Procédé de détermination en continu de la dégradation d'au moins un système (7) de post-traitement des gaz d'échappement d'un moteur (2) à combustion interne, due à l'huile lubrifiante, au carburant et/ou à au moins un additif de l'huile lubrifiante et/ou du carburant utilisé, **caractérisé en ce que** :
(i) on modifie l'huile lubrifiante, le carburant et/ou l'additif dont on désire mesurer l'impact sur le système de post-traitement (7) avec une quantité déterminée d'au moins un radiotraceur ;
(ii) on mesure au niveau du système de post-traitement (7) la quantité de radiotraceur accumulée et issue des gaz d'échappement, cette mesure étant effectuée à l'aide d'un détecteur (10) sensible à un rayonnement émis par le radiotraceur retenu par le système de post-traitement (7) ;
(iii) on transmet les mesures effectuées par ce détecteur (10) à un ordinateur programmé (11)apte à convertir ces mesures en le degré de la dégradation du système de post-traitement due à l'huile lubrifiante, au carburant et/ ou au et aux additifs.

2. Procédé selon la revendication 1, **caractérisé en ce qu'**on modifie l'huile lubrifiante, le carburant et/ou l'additif dont on désire mesurer l'impact avec une quantité déterminée d'au moins un radiotraceur comprenant Sr, Zn, Ca, S, P et/ou Mg.

3. Procédé selon la revendication 1, **caractérisé en ce que** l'on modifie l'huile lubrifiante, le carburant et/ou l'additif dont on désire mesurer l'impact avec une quantité déterminée d'au moins un radiotraceur comprenant un élément radioactif à courte demi-vie, notamment le brome 82, le germanium-69 ou le technétium 99-m.

4. Procédé selon la revendication 3, **caractérisé en ce que** le technétium 99-m est incorporé dans l'huile ou le carburant sous forme d'une solution aqueuse de pertechnétate de sodium NaTcO₄.

5. Procédé selon la revendication 3, **caractérisé en ce que** le germanium-69 est incorporé dans l'huile ou le carburant sous forme de tétra-alkylgermane.

6. Procédé selon la revendication 1 ou 2, **caractérisé en ce** le radiotraceur est activé par voie neutronique et/ou par un faisceau de protons avant incorporation dans cette huile.

7. Procédé selon l'une quelconque des revendications 1 ou 2, **caractérisé en ce que** la détermination en continu de la dégradation d'au moins un système (7) de post-traitement des gaz d'échappement d'un moteur (2) à combustion interne, due à un additif pour huile lubrifiante Adh, est réalisée par introduction dans l'huile lubrifiante d'une quantité d'espèce EAhi activable de composition identique à l'additif Adh et se substituant à une quantité identique de l'additif Adh.

8. Procédé selon l'une des revendications 1 ou 2, **caractérisé en ce que** la détermination en continu de la dégradation d'au moins un système (7) de post-traitement des gaz d'échappement d'un moteur (2) à combustion interne, due à un additif pour huile lubrifiante Adh, est réalisée par introduction dans l'huile lubrifiante d'une quantité d'espèce EAhii activable, sans effet sur les propriétés d'utilisation de l'huile, dont la quantité retrouvée et mesurée dans le système de post-traitement est corrélée à l'impact de l'additif Adh.

9. Procédé selon la revendication 8, **caractérisé en ce que** l'additif Adh est un détergent contenant du calcium et que l'espèce EAhii sous forme activée est le strontium-85.

10. Procédé selon l'une quelconque des revendications 1 ou 2, **caractérisé en ce que** la détermination en continu de la dégradation d'au moins un système (7) de post-traitement des gaz d'échappement d'un moteur (2) à combustion interne, due au carburant, est réalisée par introduction dans le carburant d'une quantité d'espèce activable EAci de composition identique à un additif Adc du carburant et se substituant à une quantité identique dudit additif Adc dans le carburant.

11. Procédé selon l'une quelconque des revendications 1 ou 2, **caractérisé en ce que** la détermination en continu de la dégradation d'au moins un système de post-traitement des gaz d'échappement d'un moteur (2) à combustion interne, due au lubrifiant, est réalisée par introduction dans l'huile lubrifiante d'une quantité d'une espèce activable EAhi ou EAhii.

12. Dispositif pour la détermination en continu de la dégradation d'au moins un système (7) de post-traitement des gaz d'échappement d'un moteur (2) à combustion interne, due à l'huile lubrifiante, au carburant et/ou à au moins un additif de l'huile lubrifiante et/ou du carburant utilisé, ce dispositif comprenant un moyen (3) d'incorporation dans l'huile lubrifiante ou dans le carburant d'une quantité déterminée d'au moins un traceur radioactif et, en aval du moteur (2), un système (7) de post-traitement des gaz de combustion issus du moteur, ce dispositif étant **caractérisé en ce qu'**il comprend :
(i) à proximité du système (7) de post-traitement et à une distance de celui-ci permettant de mesurer un rayonnement émis par les particules de traceur retenues par ce système, un détecteur (10) sensible au rayonnement du traceur radioactif ;
(ii) en liaison fonctionnelle avec le détecteur (10), un ordinateur programmé (11) apte à calculer à convertir les mesures effectuées par le détecteur en le degré de la dégradation du système de post-traitement due à l'huile lubrifiante, au carburant et/ ou aux additifs.

13. Dispositif selon la revendication 12, **caractérisé en ce que** le système de post-traitement (7) est choisi dans le groupe des systèmes à catalyseur d'oxydation, les systèmes d'élimination ou de réduction des oxydes de carbone et les systèmes de filtres à particule.

14. Dispositif selon l'une quelconque des revendications 12 et 13, **caractérisé en ce que** le détecteur (10) est une sonde de détection de rayonnements ionisants.

15. Dispositif selon l'une quelconque des revendications 12 à 14, **caractérisé en ce qu'**il comprend un filtre (9) disposé sur la ligne d'échappement des gaz de combustion entre le système de post-traitement (7) et le point de rejet de ces gaz à l'atmosphère.

## Claims

1. A method for the continuous determination of the deterioration of at least one system (7) for the post-treatment of exhaust gases from an internal combustion engine (2), due to the lubricating oil, the fuel and/or at least one additive in the lubricating oil and/or the fuel used, **characterised in that**:
(i) the lubricating oil, the fuel and/or the additive whose impact on the post-treatment system (7) it is wished to measure is modified with a given quantity of at least one radioactive tracer;
(ii) the quantity of radioactive tracer accumulated and stemming from the exhaust gases is measured at the level of the post-treatment system (7), this measurement being performed using a detector (10) sensitive to radiation emitted by the radioactive tracer retained by the post-treatment system (7);
(iii) the measurements carried out by this detector (10) are transmitted to a programmed computer (11) capable of converting these measurements into the degree of deterioration of the post-treatment system due to the lubricating oil, the fuel and/or the additive(s).

2. A method according to claim 1, **characterised in that** the lubricating oil, the fuel and/or the additive whose impact it is wished to measure is modified with a given quantity of at least one radioactive tracer comprising Sr, Zn, Ca, S, P and/or Mg.

3. A method according to claim 1, **characterised in that** the lubricating oil, the fuel and/or the additive whose impact it is wished to measure is modified with a given quantity of at least one radioactive tracer comprising a radioactive element with a short half-life, in particular, bromine-82, germanium-69 or technetium-99m.

4. A method according to claim 3, **characterised in that** technetium-99m is incorporated into the oil or fuel in the form of an aqueous solution of sodium pertechnetate NaTcO₄.

5. A method according to claim 3, **characterised in that** germanium-69 is incorporated in the oil or fuel in the form of tetraalkylgermane.

6. A method according to claim 1 or claim 2, **characterised in that** the radioactive tracer is activated by neutron bombardment and/or by a proton beam before incorporation into said oil.

7. A method according to either one of claims 1 or 2, **characterised in that** continuous determination of the deterioration of at least one system (7) for the post-treatment of the exhaust gases from an internal combustion engine (2), due to an additive for lubricating oil Adh, is performed by introducing into the lubricating oil a quantity of the activatable species EAhi of identical composition to the additive Adh and replacing an identical quantity of the additive Adh.

8. A method according to one of claims 1 or 2, **characterised in that** continuous determination of the deterioration of at least one system (7) for the post-treatment of the exhaust gases from an internal combustion engine (2), due to an additive for lubricating oil Adh, is performed by introducing into the lubricating oil a quantity of the activatable species EAhii, without any effect on the service characteristics of the oil, the quantity of which found and measured in the post-treatment system is correlated with the impact of the additive Adh.

9. A method according to claim 8, **characterised in that** the additive Adh is a detergent containing calcium and that the species EAhii in activated form is strontium-85.

10. A method according to either one of claims 1 or 2, **characterised in that** continuous determination of the deterioration of at least one system (7) for the post-treatment of the exhaust gases from an internal combustion engine (2), due to the fuel, is performed by introducing into the fuel a quantity of the activatable species EAci of identical composition to a fuel additive Adc and replacing an identical quantity of said additive Adc in the fuel.

11. A method according to either one of claims 1 or 2, **characterised in that** continuous determination of the deterioration of at least one system for the post-treatment of the exhaust gases from an internal combustion engine (2), due to the fuel, is performed by introducing into the lubricating oil a quantity of an activatable species EAhi or EAhii.

12. A device for the continuous determination of the deterioration of at least one system (7) for the post-treatment of exhaust gases from an internal combustion engine (2), due to the lubricating oil, the fuel and/or at least one additive in the lubricating oil and/or the fuel used, said device comprising a means (3) of incorporating into the lubricating oil or into the fuel a given quantity of at least one radioactive tracer and, downstream of the engine (2), a system (7) for the post-treatment of combustion gases stemming from the engine, said device being **characterised in that** it comprises:
(i) in the vicinity of the post-treatment system (7) and at a distance therefrom allowing the measurement of radiation emitted by the tracer particles retained by said system, a detector (10) sensitive to the radiation from the radioactive tracer;
(ii) in functional connection with the detector (10), a programmed computer (11) capable of calculating and converting the measurements carried out by the detector into the degree of deterioration of the post-treatment system due to the lubricating oil, the fuel and/or the additives.

13. A device according to claim 12, **characterised in that** the post-treatment system (7) is selected from among the group including systems comprising an oxidation catalyst, systems for eliminating or reducing carbon oxides and particle filter systems.

14. A device according to either one of claims 12 and 13, **characterised in that** the detector (10) is an ionising radiation detection probe.

15. A device according to any one of claims 12 to 14, **characterised in that** it comprises a filter (9) disposed on the combustion gas exhaust line between the post-treatment system (7) and the point at which said gases are discharged into the atmosphere.

## Patentansprüche

1. Verfahren zur kontinuierlichen Bestimmung der Abnutzung zumindest eines Systems (7) zur Nachbehandlung von Abgasen eines Verbrennungsmotors (2) aufgrund eines Schmieröls, eines Treibstoffs, und/oder zumindest eines Zusatzstoffs des verwendeten Schmieröls und/oder Treibstoffs,
**dadurch gekennzeichnet, dass**
(i) das Schmieröl, der Treibstoff und/oder der Zusatzstoff, dessen Einfluss auf das System zur Nachbehandlung (7) gemessen werden soll, mit einer vorbestimmten Menge zumindest eines Radioindikators verändert wird,
(ii) auf dem Niveau des Systems zur Nachbehandlung (7) die angesammelte, von den Abgasen abgegebene Menge des Radioindikators gemessen wird, wobei diese Messung mittels eines Detektors (10) durchgeführt wird, der empfänglich für eine Strahlung ist, die von dem durch das System zur Nachbehandlung (7) zurückgehaltenen Radioindikator abgegeben wird,
(iii) die von diesem Detektor (10) durchgeführten Messungen zu einem programmierten Rechner (11) übertragen werden, der in der Lage ist, diese Messungen in den Abnutzungsgrad des Systems zur Nachbehandlung aufgrund des Schmieröls, des Treibstoffs und/oder der Zusatzstoffe umzuwandeln.

2. Verfahren nach Anspruch 1, **dadurch gekennzeichnet, dass** das Schmieröl, der Treibstoff und/oder der Zusatzstoff, dessen Einfluss auf das System zur Nachbehandlung gemessen werden soll, mit einer vorbestimmten Menge zumindest eines Radioindikators verändert wird, der Sr, Zn, S, P und/oder Mg enthält.

3. Verfahren nach Anspruch 1, **dadurch gekennzeichnet, dass** das Schmieröl, der Treibstoff und/oder der Zusatzstoff, dessen Einfluss auf das System zur Nachbehandlung gemessen werden soll, mit einer vorbestimmten Menge zumindest eines Radioindikators verändert wird, der ein radioaktives Element mit kurzer Halbwertszeit enthält, insbesondere Brom-82, Germanium-69 oder Technetium-99-m.

4. Verfahren nach Anspruch 3, **dadurch gekennzeichnet, dass** das Technetium-99-m in dem Öl oder dem Treibstoff in Form einer wässrigen Lösung von Natriumpertechnetat NaTcO₄ enthalten ist.

5. Verfahren nach Anspruch 3, **dadurch gekennzeichnet, dass** das Germanium-69 in dem Öl oder dem Treibstoff in Form von Tetra-Alkylgerman enthalten ist.

6. Verfahren nach Anspruch 1 oder 2, **dadurch gekennzeichnet, dass** der Radioindikator durch einen Neutronenstrahl und/oder durch ein Protonenbündel vor einem Einbringen in das Öl aktiviert wird.

7. Verfahren nach Anspruch 1 oder 2, **dadurch gekennzeichnet, dass** die kontinuierliche Bestimmung der Abnutzung zumindest eines Systems (7) zur Nachbehandlung von Abgasen eines Verbrennungsmotors (2) aufgrund eines Zusatzstoffs des Schmieröls Adh durchgeführt wird durch Einbringen einer Menge einer aktivierbaren Sorte EAhi mit identischem Aufbau wie der Zusatzstoff Adh in das Schmieröl und das Ersetzen einer identischen Menge des Zusatzstoffs Adh.

8. Verfahren nach Anspruch 1 oder 2, **dadurch gekennzeichnet, dass** die kontinuierliche Bestimmung der Abnutzung zumindest eines Systems (7) zur Nachbehandlung von Abgasen eines Verbrennungsmotors (2) aufgrund eines Zusatzstoffs des Schmieröls Adh durchgeführt wird durch Einbringen einer Menge einer aktivierbaren Sorte EAhii ohne Einfluss auf die Verwendungseigenschaften des Öls in das Schmieröl, deren wiedergefundene und gemessene Menge in dem System zur Nachbehandlung mit dem Einfluss des Zusatzstoffs Adh in Korrelation gebracht wird.

9. Verfahren nach Anspruch 8, **dadurch gekennzeichnet, dass** der Zusatzstoff Adh ein Reinigungsmittel ist, das Kalzium enthält, und dass die Sorte EAhii in aktivierter Form Strontium-85 ist.

10. Verfahren nach Anspruch 1 oder 2, **dadurch gekennzeichnet, dass** die kontinuierliche Bestimmung der Abnutzung zumindest eines Systems (7) zur Nachbehandlung von Abgasen eines Verbrennungsmotors (2) aufgrund eines Treibstoffs durchgeführt wird durch Einbringen einer Menge einer aktivierbaren Sorte EAci mit identischem Aufbau wie ein Zusatzstoff Adc des Treibstoffs in den Treibstoff und das Ersetzen einer identischen Menge des Zusatzstoffs Adc in dem Treibstoff.

11. Verfahren nach Anspruch 1 oder 2, **dadurch gekennzeichnet, dass** die kontinuierliche Bestimmung der Abnutzung zumindest eines Systems zur Nachbehandlung von Abgasen eines Verbrennungsmotors (2) aufgrund des Schmiermittels durchgeführt wird durch Einbringen einer Menge einer aktivierbaren Sorte EAhi oder AEhii in das Schmieröl.

12. Vorrichtung zur kontinuierlichen Bestimmung der Abnutzung zumindest eines Systems (7) zur Nachbehandlung von Abgasen eines Verbrennungsmotors (2) aufgrund eines Schmieröls, eines Treibstoffs, und/oder zumindest eines Zusatzstoffs des verwendeten Schmieröls und/oder Treibstoffs,
wobei die Vorrichtung enthält:
ein Mittel (3) zum Einbringen einer vorbestimmten Menge zumindest eines Radioindikators in das Schmieröl oder den Treibstoff und
ein System (7) zur Nachbehandlung der von dem Motor abgegebenen Verbrennungsgase hinter dem Motor(2),
**dadurch gekennzeichnet, dass** die Vorrichtung enthält:
(i) einen Detektors (10), der empfänglich für eine Strahlung des Radioindikators ist, in der Nähe des Systems (7) zur Nachbehandlung und in einem Abstand von diesem, der es ermöglicht, eine Strahlung zu messen, die von den durch das System zurückgehaltenen Partikeln des Indikators abgegeben wird, und
(ii) einen programmierten Rechner (11) in funktioneller Verbindung mit dem Detektor (10), der zum Rechnen in der Lage ist,um die durch den Detektor durchgeführten Messungen in den Abnutzungsgrad des Systems zur Nachbehandlung aufgrund des Schmieröls, des Treibstoffs und/oder der Zusatzstoffe umzuwandeln.

13. Vorrichtung nach Anspruch 12, **dadurch gekennzeichnet, dass** das System zur Nachbehandlung (7) gewählt ist aus der Gruppe der Systeme mit Oxidationskatalysator, der Systeme zum Entfernen oder Verringern der Kohlenstoffoxide und der Systeme mit Partikelfilter.

14. Vorrichtung nach Anspruch 12 oder 13, **dadurch gekennzeichnet, dass** der Detektor (10) eine Sonde zum Erfassen ionisierender Strahlen ist.

15. Vorrichtung nach einem der Ansprüche 12 bis 14, **dadurch gekennzeichnet, dass** sie ein Filter (9) enthält, das an der Auslassleitung der Verbrennungsgase zwischen dem System zur Nachbehandlung (7) und dem Ort des Abgebens dieser Gase an die Atmosphäre angeordnet ist.
